# EUROPÄISCHE PATENTSCHRIFT

(11) **EP 0 903 027 B1**
(45) Veröffentlichungstag und Bekanntmachung des Hinweises auf die Patenterteilung: **28.02.2001**
(21) Anmeldenummer: 97928106.0
(22) Anmeldetag: 16.05.1997
(51) Int. Cl.: H04L 9/08

(54) **VERFAHREN ZUM GRUPPENBASIERTEN KRYPTOGRAPHISCHEN SCHLÜSSELMANAGEMENT ZWISCHEN EINER ERSTEN COMPUTEREINHEIT UND GRUPPENCOMPUTEREINHEITEN**
PROCESS FOR GROUP-BASED CRYPTOGRAPHIC CODE MANAGEMENT BETWEEN A FIRST COMPUTER UNIT AND GROUP COMPUTER UNITS
PROCEDE DE GESTION DE CLES CRYPTOGRAPHIQUES, FONDE SUR UN GROUPE, ENTRE UNE PREMIERE UNITE INFORMATIQUE ET DES UNITES INFORMATIQUES D'UN GROUPE

(30) Priorität: 05.06.1996 DE 19622630
(43) Veröffentlichungstag der Anmeldung: 24.03.1999
(73) Patentinhaber: SIEMENS AKTIENGESELLSCHAFT, 80333 München (DE)
(72) Erfinder: EUCHNER, Martin, D-81737 München (DE); KLASEN, Wolfgang, D-85221 Dachau (DE); KESSLER, Volker, D-85256 Vierkirchen (DE)
(86) Internationale Anmeldenummer: DE9701001
(87) Internationale Veröffentlichungsnummer: WO9747108

(56) Entgegenhaltungen:
- EP-A- 0 307 627
- EP-A- 0 402 083
- WO-A-95/08885
- AZIZ A ET AL: "Privacy and authentication for wireless local area networks" IEEE PERSONAL COMMUNICATIONS, 1994, USA, Bd. 1, Nr. 1, ISSN 1070-9916, Seiten 25-31, XP000460718
- CHORLEY B J ET AL: "The definition and implementation of a secure communications protocol" PROCEEDINGS OF THE INTERNATIONAL CARNAHAN CONFERENCE ON SECURITY TECHNOLOGY, ZURICH, SWITZERLAND, 4-6 OCT. 1983, ISBN 0-89779-057-X, 1983, LEXINGTON, KY, USA, UNIV. KENTUCKY, USA, Seiten 95-102, XP002043057

## Beschreibung

Bei einer Kommunikation mit mehreren Kommunikationsteilnehmern ist es in vielen technischen Bereichen notwendig, die gesamte Kommunikation aller Teilnehmer mittels kryptographischer Verfahren gegen jeglichen Mißbrauch abzusichern. Dabei ist der Aufwand, der für eine kryptographische Absicherung der gesamten Kommunikation erforderlich ist, abhängig von der jeweiligen Anwendung. So ist es beispielsweise in Privatgesprächen unter Umständen nicht von sehr großer Bedeutung, daß alle kryptographisch möglichen Sicherheitsmaßnahmen zur Absicherung der Kommunikation getroffen werden. Bei Kommunikation mit sehr vertraulichem Inhalt ist jedoch beispielsweise eine sehr strikte Absicherung der Kommunikation von erheblicher Bedeutung.

Die Auswahl von für die Absicherung der Kommunikation verwendeten Sicherheitsdiensten, Sicherheitsmechanismen, Sicherheitsalgorithmen und Sicherheitsparametern wird als Sicherheitspolitik, die während der Kommunikation zwischen Kommunikationspartnern eingehalten wird, bezeichnet.

Da jedoch das Sicherheitsbedürfnis und damit verbunden die Sicherheitspolitik von Kommunikationssitzung zu Kommunikationssitzung und von Anwendung zu Anwendung unterschiedlich ist und da nicht alle Kommunikationsteilnehmer auch tatsächlich über alle kryptographischen Verfahren verfügen, kann es bei häufig wechselnden Kommunikationspartnern zu schwerwiegenden Diskrepanzen in der erforderlichen bzw. möglichen Sicherheitspolitik kommen, die von der jeweiligen Computereinheit des Kommunikationspartners unterstützt wird und somit gewährleistet werden kann.

Es ist erforderlich, daß in jeder Kommunikationssitzung innerhalb der Gruppe, die an der Kommunikationssitzung teilnimmt, eine einheitliche Sicherheitspolitik für die jeweilige Kommunikation festgelegt wird. Vor allem ist es erforderlich, einen für die gesamte Gruppe eindeutigen sog. Gruppenschlüssel verbindlich festzulegen.

Eine Übersicht über allgemein verwendbare kryptographische Verfahren, die in dem Verfahren eingesetzt werden können, ist beispielsweise in dem Dokument [1] zu finden.

Es ist bekannt, zwischen zwei Kommunikationspartnern eine Sicherheitspolitik auszuhandeln, wobei sich jedoch die in diesem Dokument beschriebene Aushandlung nur auf wenige, zuvor festgelegte Parameter beschränkt ist [2].

Aus [3] ist ein weiteres Verfahren zum Aushandeln einer Sicherheitspolitik zwischen einem ersten und einem zweiten Kommunikationspartner bekannt. Bei diesem Verfahren sendet der erste Kommunikationspartner einen ersten Sicherheitsvorschlag zu dem zweiten Kommunikationspartner, welcher den ersten Sicherheitsvorschlag annimmt oder einen zweiten Sicherheitsvorschlag an den ersten Kommunikationsteilnehmer zurückschickt.

Somit liegt der Erfindung das Problem zugrunde, ein gruppenbasiertes kryptographisches Schlüsselmanagement zwischen einer ersten Computereinheit und einer beliebigen Anzahl weiterer Gruppencomputereinheiten durchzuführen, wobei die Aushandlung nicht auf bestimmte Parameter beschränkt ist.

Das Problem wird durch das Verfahren gemäß Patentanspruch 1 gelöst.

Es wird von einer ersten Computereinheit eine erste Nachricht gebildet und jeweils zu mindestens einem Teil von Gruppencomputereinheiten übertragen. Die erste Nachricht enthält mindestens einen ersten Sicherheitspolitikvorschlag und eine erste Identitätsprüfgröße. Der erste Sicherheitspolitikvorschlag wird anhand der ersten Identitätsprüfgröße in den Gruppencomputereinheiten verifiziert und in den Gruppencomputereinheiten werden zweite Sicherheitspolitikvorschläge, jeweils unabhängig von einander, gebildet. Dies bedeutet, daß in jeder Gruppencomputereinheit ein eigener zweiter Sicherheitspolitikvorschlag gebildet wird und jeweils in einer zweiten Nachricht zu der ersten Computereinheit übertragen wird. In der ersten Computereinheit werden die einzelnen zweiten Sicherheitspolitikvorschläge empfangen und es wird eine dritte Nachricht gebildet und zu den Gruppencomputereinheiten übertragen. In den Gruppencomputereinheiten wird die Integrität der in der dritten Nachricht übertragenen Gruppensicherheitspolitik anhand der dritten Identitätsprüfgröße, die in der dritten Nachricht enthalten ist, überprüft.

Mit diesem Verfahren wird erstmals ein gruppenbasiertes Verfahren zum kryptographischen Schlüsselmanagement vorgestellt, mit dem eine Aushandlung einer Sicherheitspolitik zwischen der ersten Computereinheit und weiteren Computereinheiten, den Gruppencomputereinheiten, möglich ist.

Bei diesem Verfahren wird vorteilhafterweise von der ersten Computereinheit bestimmt, welche weiteren Gruppencomputereinheiten an einer in dem Verfahren anschließenden Kommunikation teilnehmen sollen. Dies bedeutet anschaulich, daß die Gruppencomputereinheiten von der ersten Computereinheit "eingeladen" werden.

Ferner ist ein erheblicher Vorteil dieses Verfahrens darin zu sehen, daß in den Gruppencomputereinheiten jeweils nur das Schlüsselzertifikat der eigenen Computereinheit bekannt sein muß. Die Schlüsselzertifikate der anderen Gruppencomputereinheiten sind für die jeweilige Gruppencomputereinheit nicht von Bedeutung. Durch diese Eigenschaft des Verfahrens wird ein erheblicher Aufwand an Schlüsselverwaltung für die Schlüssel der jeweils anderen Gruppencomputereinheiten in der jeweiligen Gruppencomputereinheit eingespart.

Vorteilhafte Weiterbildungen der Erfindung ergeben sich aus den abhängigen Ansprüchen.

Durch die Verschlüsselung der ersten Nachricht und/oder der dritten Nachricht mit einem öffentlichen Schlüssel der jeweiligen Gruppencomputereinheit, an den die Nachrichten jeweils gesendet werden, und durch Entschlüsselung der jeweiligen Nachrichten in der jeweiligen Gruppencomputereinheit wird die Vertraulichkeit der übertragenen Nachrichten und somit der ausgehandelten Sicherheitspolitikvorschläge bzw. Sicherheitspolitik möglich. Durch diese Weiterbildung des Verfahrens wird die kryptographische Sicherheit des Verfahrens erheblich erhöht.

Ferner ist es in einer Weiterbildung vorteilhaft, daß die Nachrichten zusätzlich eine Zufallszahl, die jeweils entweder von der ersten Computereinheit oder der jeweiligen Gruppencomputereinheit erzeugt werden, enthalten. Durch die Zufallszahlen können Wiedereinspielungen von unbefugt abgehörten Nachrichten entdeckt werden. Des weiteren können die Zufallszahlen zur gegenseitigen Authentifikation der ersten Computereinheit und den Gruppencomputereinheiten verwendet werden.

Ferner ist es in einer Weiterbildung des Verfahrens vorteilhaft, daß die erste Nachricht ein Schlüsselzertifikat der ersten Computereinheit aufweist. Durch diese Weiterbildung wird eine vertrauenswürdige Authentifikation der ersten Computereinheit gegenüber den Gruppencomputereinheiten ermöglicht. Durch diese Weiterbildung wird die kryptographische Sicherheit des Verfahrens weiter erhöht.

Es ist in einer Weiterbildung des Verfahrens vorteilhaft, daß vor der Übertragung der ersten Nachricht eine erste Authentifikationsnachricht in der ersten Computereinheit gebildet und an die Gruppencomputereinheiten übertragen wird. Die erste Authentifikationsnachricht enthält dabei mindestens ein Schlüsselzertifikat der ersten Computereinheit, welches in den Gruppencomputereinheiten verifiziert und gespeichert wird. Durch diese Weiterbildung wird eine weitere Steigerung der erreichten kryptographischen Sicherheit des Verfahrens erreicht.

Ferner ist es vorteilhaft, daß vor der Übertragung der ersten Nachricht in den Gruppencomputereinheiten jeweils eine zweite Authentifikationsnachricht gebildet und zu der ersten Computereinheit übertragen wird. Die zweiten Authentifikationsnachrichten weisen jeweils mindestens das entsprechende Schlüsselzertifikat der jeweiligen Gruppencomputereinheit, von der die jeweilige zweite Authentifikationsnachricht gesendet wird, auf. Die Schlüsselzertifikate werden von der ersten Computereinheit verifiziert und ebenso gespeichert. Durch diese Vorgehensweise ist ein Austausch der Schlüsselzertifikate zwischen den Gruppencomputereinheiten und der ersten Computereinheit möglich, v. a. bei Kombination dieser Weiterbildung mit der Weiterbildung des Verfahrens, bei der eine erste Authentifikationsnachricht von der ersten Computereinheit zu den Gruppencomputereinheiten übertragen wird. Des weiteren wird durch diese Weiterbildung die kryptographische Sicherheit erhöht und die Schlüsselverwaltung wird schnell durchführbar, da bei dieser Weiterbildung anschließend die einzelnen Computereinheiten jeweils im Besitz des Schlüsselzertifikats und somit des öffentlichen Schlüssels des jeweiligen Kommunikationspartners ist.

Zur weiteren Verbesserung der kryptographischen Sicherheit des Verfahrens ist es in einer Weiterbildung vorgesehen, daß die zweite Authentifikationsnachricht eine Authentifikationsidentitätsprüfgröße aufweist, die zur Überprüfung der Integrität der zweiten Authentifikationsnachricht in der ersten Computereinheit verwendet werden kann. Ferner ist es vorteilhaft, daß mindestens ein Teil der zweiten Authentifikationsnachricht jeweils mit einem öffentlichen Schlüssel der ersten Computereinheit verschlüsselt wird. Durch diese Weiterbildung wird wiederum die kryptographische Sicherheit des Verfahrens erhöht.

Auch ist es in einer Weiterbildung vorteilhaft, daß nach Überprüfung der Integrität der Gruppensicherheitspolitik von den Gruppencomputereinheiten jeweils eine Quittungsnachricht gebildet und zu der ersten Computereinheit übertragen wird, wodurch der ersten Computereinheit mitgeteilt wird, daß die Gruppensicherheitspolitik empfangen und verarbeitet wurde.

Durch die Weiterbildung des Verfahrens, daß mindestens eine der folgenden Identitätsprüfgrößen unter Verwendung einer Hash-Funktion gebildet wird, wird die Durchführbarkeit des Verfahrens in der jeweiligen Computereinheit erheblich erhöht, da eine Hash-Funktion, basierend auf asymmetrischen Kryptoverfahren, einen erheblich geringeren Rechenaufwand benötigt als beispielsweise eine digitale Signatur. Die Identitätsprüfgrößen, die beispielsweise unter Verwendung einer Hash-Funktion gebildet werden können sind beispielsweise: die erste Identitätsprüfgröße, die zweite Identitätsprüfgröße, die dritte Identitätsprüfgröße sowie die Authentifikationsidentitätsprüfgröße.

Das Verfahren kann in einer Weiterbildung auch mehreren Iterrationen unterzogen werden, d. h. die im weiteren beschriebene Aushandlung der Sicherheitspolitik kann über mehrere Schritte bilateral zwischen der ersten Computereinheit und einer Gruppencomputereinheit oder für eine beliebige Anzahl der Gruppencomputereinheiten erfolgen. Durch diese Vorgehensweise kann die Granularität der Aushandlung der zu verwendenden Sicherheitspolitik erheblich erhöht und somit die Effizienz und Zuverlässigkeit der eingesetzten Sicherheitspolitik optimiert werden.

In den Figuren ist ein Ausführungsbeispiel dargestellt, welches im weiteren näher erläutert wird:

Es zeigen
- Fig. 1: eine Skizze, in der eine erste Computereinheit und mit der ersten Computereinheit gekoppelte Gruppencomputereinheiten dargestellt sind;
- Fig. 2: ein Ablaufdiagramm, in dem die Verfahrensschritte des Verfahrens dargestellt sind;
- Fig. 3: ein Ablaufdiagramm, in dem eine Weiterbildung des Verfahrens mit zusätzlichen Authentifikationsnachrichten dargestellt ist;
- Fig. 4: ein Ablaufdiagramm, in dem das Verfahren ohne Authentifikationsnachrichten mit einigen Weiterbildungen des Verfahrens dargestellt ist;
- Fig. 5: ein Ablaufdiagramm, in dem das Verfahren mit den Authentifikationsnachrichten und einigen Weiterbildungen des Verfahrens dargestellt ist.

Eine Übersicht über allgemein verwendbare kryptographische Verfahren, die in dem Verfahren eingesetzt werden können, ist beispielsweise in dem Dokument [2] zu finden. Weitere kryptographische Verfahren sind ohne Einschränkung mit ihren spezifischen Eigenschaften dem Fachmann bekannt und können abhängig von ihren kryptographischen Eigenschaften ohne weitere Einschränkungen in dem Verfahren verwendet werden.

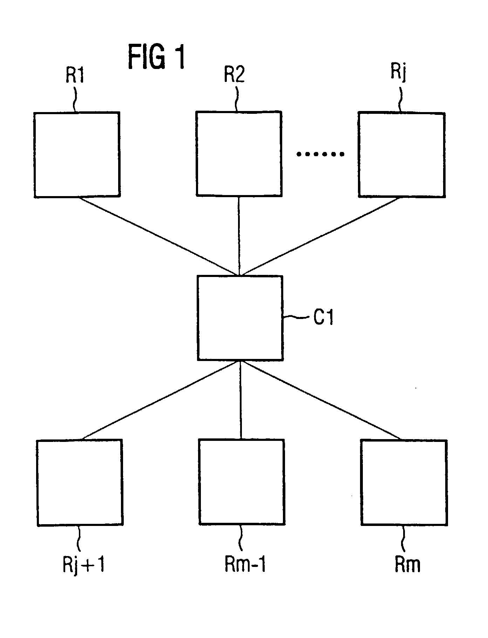

In Fig. 1 ist eine erste Computereinheit C1 dargestellt, die mit einer beliebigen Anzahl m von Gruppencomputereinheiten Rj über beliebige Kopplungen K gekoppelt ist. Mit einem Index j wird jede Gruppencomputereinheit Rj eindeutig identifiziert. Der Index j ist eine natürliche Zahl zwischen 1 und der Anzahl m der Gruppencomputereinheiten Rj.

Für das Verfahren ist es lediglich erforderlich, daß die Gruppencomputereinheiten Rj mit der ersten Computereinheit C1 gekoppelt sind. Die Gruppencomputereinheiten Rj müssen nicht miteinander verbunden sein.

Es ist auch nicht notwendig, daß die Gruppencomputereinheiten Rj untereinander Nachrichten austauschen. Dies führt zu einer erheblichen Rechenzeiteinsparung in den Gruppencomputereinheiten Rj, da bei diesem Verfahren in jeder Gruppencomputereinheit Rj lediglich ein im weiteren beschriebenes Schlüsselzertifikat CERTI der ersten Computereinheit C1 bzw. ein anderweitig vertrauenswürdiger öffentlicher Schlüssel PK_I bekannt sein. Weitere kryptographische Schlüssel anderer Gruppencomputereinheiten Rj brauchen bei diesem Verfahren nicht in den einzelnen Gruppencomputereinheiten Rj gespeichert und verwaltet werden.

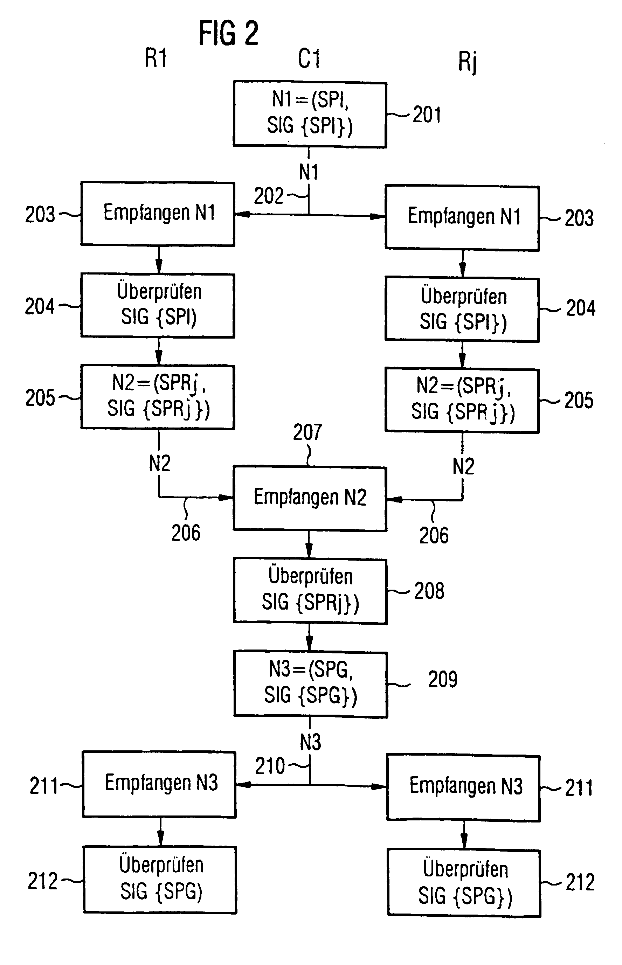

In Fig. 2 sind die einzelnen Verfahrensschritte des Verfahrens in einem Ablaufdiagramm dargestellt. Es wird in der ersten Computereinheit in einem ersten Schritt 201 eine erste Nachricht N1 gebildet. Die erste Nachricht weist mindestens einen ersten Sicherheitspolitikvorschlag SPI und eine erste Identitäsprüfgröße SIG{SPI} auf.

In dem ersten Sicherheitspolitikvorschlag SPI sind beliebige Sicherheitsdienste, Sicherheitsmechanismen, Sicherheitsalgorithmen, sowie Sicherheitsparameter innerhalb der Sicherheitsalgorithmen enthalten.

Die Sicherheitsdienste, Sicherheitsmechanismen, Sicherheitsalgorithmen, sowie Sicherheitsparameter sind abhängig von der von der ersten Computereinheit C1 verfolgten Sicherheitspolitik bzw. von der für die Kommunikation veranschlagte Sicherheitspolitik.

Eine spezifische, für die jeweilige Kommunikation geplante Auswahl der Sicherheitsdienste, Sicherheitsmechanismen, Sicherheitsalgorithmen, Sicherheitsparameter wird als erster Sicherheitspolitikvorschlag SPI in der ersten Nachricht N1 in einem zweiten Schritt 202 von der ersten Computereinheit C1 zu mindestens einem Teil der Gruppencomputereinheiten Rj übertragen.

Anschaulich bedeutet diese Übertragung 202 der ersten Nachricht N1, daß die Gruppencomputereinheiten Rj von der ersten Computereinheit C1 zu der anschließenden Gruppenkommunikation "eingeladen" werden. Zusammen mit der "Einladung" wird den Gruppencomputereinheiten Rj die geplante Sicherheitspolitik mit dem ersten Sicherheitspolitikvorschlag SPI mitgeteilt.

Weiterhin weist die erste Nachricht N1 eine erste Identitätsprüfgröße SIG{SPI} auf. Mit der ersten Identitätsprüfgröße SIG{SPI}, die mindestens über den ersten Sicherheitspolitikvorschlag SPI gebildet wird, wird die Erhaltung der Identität des ersten Sicherheitspolitikvorschlags SPI bei der Übertragung 202 für den Empfänger, d. h. für die jeweilige Gruppencomputereinheit Rj gewährleistet.

Zur Bildung von in diesem Verfahren verwendeten Identitäsprüfgrößen kann beispielsweise das Prinzip der digitalen Unterschrift, wie es in dem Dokument [2] beschrieben ist, oder auch eine beliebige Hash-Funktion verwendet werden. Unter einer Hash-Funktion ist in diesem Zusammenhang eine Funktion zu verstehen, bei der es nicht möglich ist, zu einem gegebenen Funktionswert einen passenden Eingangswert zu berechnen. Ferner wird einer beliebig langen Eingangszeichenfolge eine Ausgangszeichenfolge fester Länge zugeordnet. Desweiteren wird für die Hash-Funktion in diesem Zusammenhang Kollissionsfreiheit gefordert, d. h. es darf nicht möglich sein, zwei verschiedene Eingangszeichenfolgen zu finden, die dieselbe Ausgangszeichenfolge ergeben.

Nachdem die jeweilige Gruppencomputereinheit Rj die erste Nachricht N1 empfangen hat 203, wird anhand der ersten Identitätsprüfgröße SIG{SPI} die Identität des ersten Sicherheitspolitiksvorschlags SPI überprüft 204.

Ist die Identität gewahrt geblieben, d. h. ist kein Übertragungsfehler aufgetreten, so wird von jeder der "eingeladenen" Gruppencomputereinheiten Rj eine zweite Nachricht N2 gebildet 205. Die zweite Nachricht N2 enthält jeweils einen für die jeweilige Gruppencomputereinheit Rj spezifischen, von der jeweiligen Gruppencomputereinheit Rj gebildeten zweiten Sicherheitspolitikvorschlag SPRj.

Der zweite Sicherheitspolitikvorschlag SPRj kann beispielsweise lediglich in einer Bestätigung des ersten Sicherheitspolitikvorschlags SPI oder auch in einer für die jeweilige Gruppencomputereinheit Rj spezifische Auswahl von Sicherheitsdiensten, Sicherheitsmechanismen, Sicherheitsalgorithmen, Sicherheitsparametern bestehen, die von der jeweiligen Gruppencomputereinheit Rj unterstützt bzw. für die zukünftige Kommunikationssitzung aus Sicht der jeweiligen Gruppencomputereinheit Rj verwendet werden sollen.

Für den zweiten Sicherheitspolitikvorschlag SPRj wird ferner jeweils eine zweite Identiätsprüfgröße SIG{SPRj) gebildet. Die zweite Identitätsprüfgröße SIG{SPRj} ist ebenfalls in der zweiten Nachricht N2 enthalten.

Die zweite Nachricht N2 wird jeweils von der Gruppencomputereinheit Rj zu der ersten Computereinheit C1 übertragen 206.

Nachdem jeweils die zweite Nachricht N2 von der ersten Computereinheit empfangen wurde 207, wird für die jeweils empfangene zweite Nachricht N2 überprüft, ob die Identität des jeweiligen zweiten Sicherheitspolitikvorschlags SPRj bei der Übertragung 206 zu der ersten Computereinheit C1 erhalten geblieben ist 208. Die Überprüfung der Integrität der Daten kann beispielsweise bei Verwendung einer digitalen Unterschrift, bei der zur Codierung der jeweils geheime Schlüssel des Senders SK_I, SK_Rj verwendet wird, jeweils der öffentliche Schlüssel des Senders PK_I, PK_Rj eingesetzt werden. Wird jedoch eine Hash-Funktion zur Integritätssicherung verwendet, so wird bei der Überprüfung der Integrität jeweils bei dem Empfänger lediglich die zu überprüfenden Daten der Hash-Funktion unterzogen, und das Ergebnis wird mit der jeweiligen Identitätsprüfgröße verglichen.

Nachdem in der ersten Computereinheit C1 alle oder ein vorgebbarer Teil der zweiten Nachrichten N2 empfangen und überprüft wurden, so wird in der ersten Computereinheit C1 eine dritte Nachricht N3 gebildet 209.

Die dritte Nachricht N3 enthält mindestens eine Gruppensicherheitspolitik SPG, in der angegeben ist, welche Sicherheitspolitik nun tatsächlich für die anschließende Kommunikation eingesetzt werden soll.

Die Bildung der Gruppensicherheitspolitik SPG ist automatisch möglich, beispielsweise unter Berücksichtigung der zweiten Sicherheitspolitikvorschläge SPRj der Gruppencomputereinheiten Rj, oder sie kann auch von einem Benutzer der ersten Computereinheit C1 bestimmt werden.

Die benutzerbasierte Bestimmung der Gruppensicherheitspolitik SPG in der ersten Computereinheit C1 basiert auf einer "manuellen" Auswahl der tatsächlich eingesetzten Sicherheitsdienste, Sicherheitsmechanismen, Sicherheitsalgorithmen, bzw. Sicherheitsparameter durch den Benutzer. Dies kann, muß jedoch nicht unter Berücksichtigung der zweiten Sicherheitspolitikvorschläge SPRj erfolgen.

In einer Weiterbildung des Verfahrens ist es vorgesehen, daß die Gruppensicherheitspolitik SPG einen gemeinsamen Gruppenkonferenzschlüssel K_{C}, der in der späteren Kommunikation zur Verschlüsselung der Nutzdaten verwendet wird, enthält. In der Gruppensicherheitspolitik SPG kann ferner ein Gruppenverteilungsschlüssel K_{D} enthalten sein, mit dem spätere Gruppenkonferenzschlüssel K_{C}, die in der späteren Kommunikation selbst zur Verschlüsselung der Nutzdaten verwendet werden, von der ersten Computereinheit Cl zu den Gruppencomputereinheiten Rj in verschlüsselter Form verteilt werden.

Ferner weist die Gruppensicherheitspolitik SPG die für die weitere Kommunikation tatsächlich ausgewählten Sicherheitsdienste, Sicherheitsmechanismen, Sicherheitsalgorithmen, Sicherheitsparameter auf, also die tatsächlich verfolgte Sicherheitspolitik.

Somit können sowohl die Gruppensicherheitspolitik SPG als auch der Gruppenkonferenzschlüssel K_{C} oder der Gruppenverteilungsschlüssel K_{D} vertraulich und verbindlich an die Gruppencomputereinheiten SPG übertragen werden.

Die Gruppenkonferenzschlüssel K_{C} oder der Gruppenverteilungsschlüssel K_{D} können entweder ein symmetrischer Schlüssel oder ein asymmetrischer Schlüssel sein.

Ferner weist die dritte Nachricht N3 eine dritte Identitätsprüfgröße SIG{SPG} auf.

Die dritte Nachricht N3 wird von der ersten Computereinheit C1 zu den Gruppencomputereinheiten Rj übertragen 210. In den Gruppencomputereinheiten Rj werden die dritten Nachrichten N3 empfangen 211 und anhand der dritten Identitätsprüfgröße SIG{SPG} wird die Integrität der dritten Nachricht N3 überprüft.

Auf diese Weise ist eine im weiteren Verfahren verwendete Sicherheitspolitik SPG den Gruppencomputereinheiten Rj, also den anderen Teilnehmern der anschließenden Kommunikation mitgeteilt, wobei es möglich ist, Vorschläge, bzw. Wünsche der Gruppencomputereinheiten Rj bezüglich der zu verwendenden Sicherheitspolitik zu berücksichtigen.

In einer Weiterbildung des Verfahrens ist nicht nur eine Iteration, d. h. eine Aushandlungsphase für die Sicherheitspolitikvorschläge SPI, SPRj, SPG vorgesehen, sondern eine mehrfache Kommunikation zwischen der ersten Computereinheit C1 und den Gruppencomputereinheiten Rj. Die dabei verwendeten weiteren Nachrichten Nn und deren Identitätsprüfgrößen ergeben sich anhand des oben beschriebenen prinzipiellen Vorgehens. Durch diese Weiterbildung wird eine erhöhte Granularität in der Aushandlung der schließlich eingesetzten Sicherheitspolitik und somit eine bessere Optimierung der zu verwendenden Sicherheitsdienste, Sicherheitsmechanismen, Sicherheitsalgorithmen und Sicherheitsparametern gewährleistet.

In verschiedenen Weiterbildungen des Verfahrens ist es vorgesehen, das Verfahren in der kryptographischen Sicherheit zu verbessern.

Dabei ist es in einer Weiterbildung vorgesehen, die erste Nachricht N1 und/oder die dritte Nachricht N3 jeweils mit einem öffentlichen Schlüssel PK_Rj der jeweiligen Gruppencomputereinheit Rj zu verschlüsseln, und die erste Nachricht N1 und/oder die dritte Nachricht N3 in der jeweiligen Gruppencomputereinheit Rj mit einem geheimen Schlüssel SK_Rj der jeweiligen Gruppencomputereinheit Rj zu entschlüsseln. Auf diese Weise wird die Vertraulichkeit der ersten Nachricht N1 bzw. der dritten Nachricht N1 bei der Übertragung 202, 206 gewährleistet.

Weiteren kryptographischen Angriffen, beispielsweise das Wiedereinspielen abgefangener bzw. abgehörter Daten wird durch Verwendung von Zufallszahlen NI, NRj in den Nachrichten N1, N2, N3 sowie in im weiteren beschriebenen Authentifikationsnachrichten AN1, AN2 Rechnung getragen. Wird in der ersten Computereinheit C1 eine erste Zufallszahl NI gebildet, und die erste Zufallszahl NI beispielsweise in der ersten Nachricht N1 oder in einer im weiteren beschriebenen ersten Authentifikationsnachricht AN1 zu den jeweiligen Gruppencomputereinheiten Rj übertragen, so kann die erste Zufallszahl NI auch zur Authentifikation der jeweiligen Gruppencomputereinheit Rj gegenüber der ersten Computereinheit C1 verwendet werden, v. a. für den Fall, daß die erste Zufallszahl NI in verschlüsselter Form in der ersten Nachricht N1 oder der ersten Authentifikationsnachricht AN1 übertragen wird. Die Authentifikation erfolgt beispielsweise dadurch, daß die erste Zufallszahl NI von der jeweiligen Gruppencomputereinheit Rj der zweiten Nachricht N2 oder der zweiten Authentifikationsnachricht AN2 hinzugefügt wird und die zweite Nachricht N2 bzw. die zweite Authentifiktationsnachricht AN2 in verschlüsselter Form zu der ersten Computereinheit C1 übertragen wird. Auf diese Weise wird für die erste Computereinheit C1 gewährleistet, daß die jeweilige Nachricht lediglich von einer Gruppencomputereinheit Rj gesendet worden sein kann.

Dieser Effekt der Authentifikation kann jedoch auch durch Verwendung asymmetrischer Verschlüsselungsverfahren erreicht werden, indem beispielsweise die zweite Nachricht N2 oder die zweite Authentifikationsnachricht AN2 jeweils mit einem geheimen Schlüssel SK_I, SK_Rj des jeweiligen Senders verschlüsselt wird und die jeweilige Nachricht in dem Empfänger mit einem öffentlichen Schlüssel PK_I, PK_Rj des Senders entschlüsselt wird. Auf diese Weise wird dem Empfänger gewährleistet, daß der Sender auch tatsächlich die jeweilige Nachricht gesendet hat.

Ferner ist es auch vorgesehen, daß in den Gruppencomputereinheiten Rj unabhängig voneinander zweite Zufallsgrößen NRj, die natürlich zwischen den einzelnen Gruppencomputereinheiten Rj voneinander unterschiedlich sind, gebildet, und den einzelnen Nachrichten hinzugefügt.

Die einzelnen Zufallszahlen werden jeweils von dem Empfänger gespeichert und können in weiteren Nachrichten beispielsweise zur Authentifikation wiederverwendet.

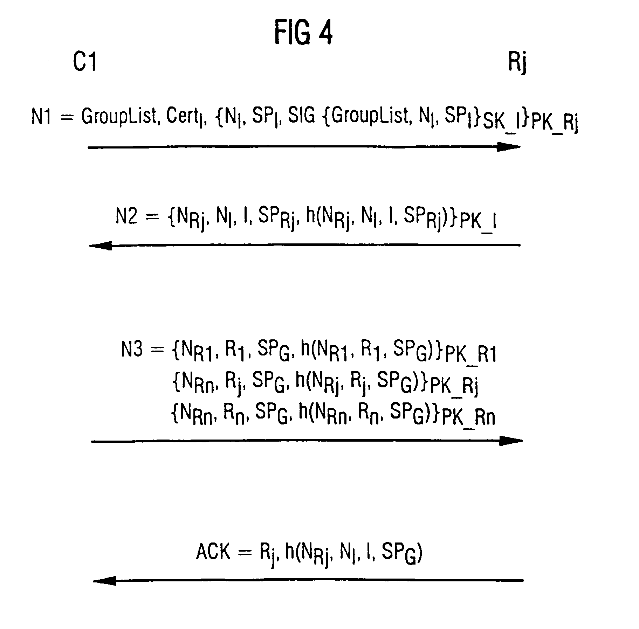

In welchen Nachrichten die Zufallszahlen NI, NRj in dem Verfahren beispielsweise eingesetzt werden können, wird im weiteren anhand der Fig. 4 beschrieben.

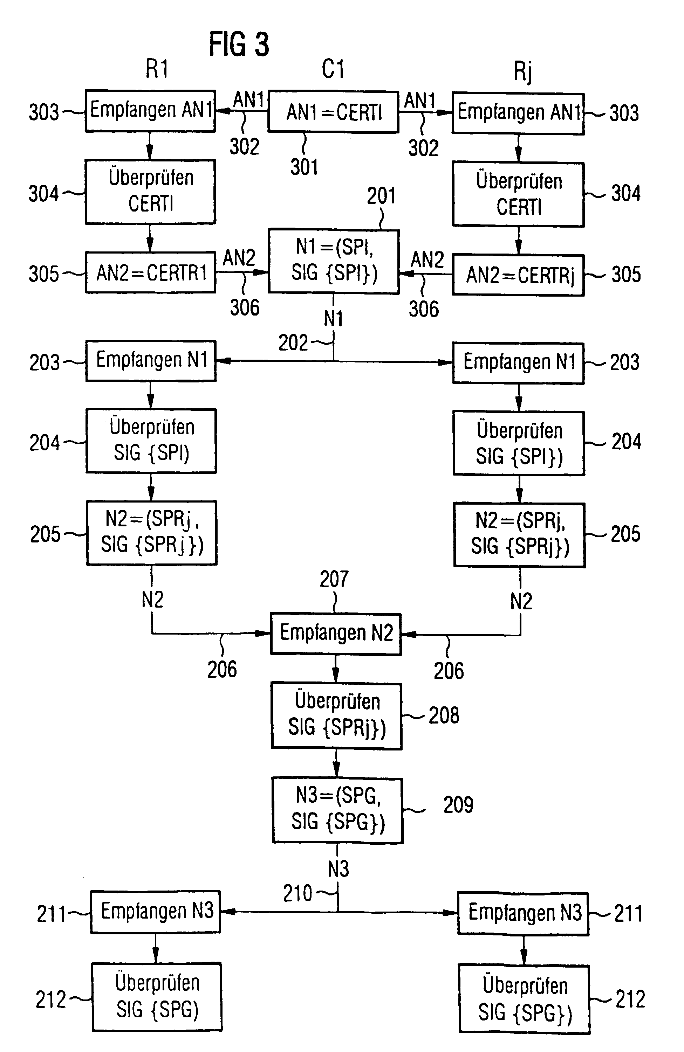

In Fig. 3 ist das in Fig. 2 beschriebene Verfahren mit einer Weiterbildung vorgesehen, bei der zu Beginn des Verfahrens eine erste Authentifikationsnachricht AN1 von der ersten Computereinheit C1 gebildet 301 wird und jeweils zu der jeweiligen Gruppencomputereinheit übertragen wird 302. Die erste Authentifikationsnachricht AN1 enthält mindestens ein Schlüsselzertifikat CERTI der ersten Computereinheit Cl.

Nach Empfang 303 der ersten Authentifikationsnachricht AN1 und Verifizierung 304 des Schlüsselzertifikats CERTI der ersten Computereinheit C1 wird in jeder Gruppencomputereinheit Rj eine zweite Authentifikationsnachricht AN2 gebildet und jeweils von der Gruppencomputereinheit Rj zu der ersten Computereinheit C1 übertragen 306.

Die zweite Authentifikationsnachricht AN2 enthält bei dieser Weiterbildung mindestens jeweils ein Schlüsselzertifikat CERTRj der jeweiligen Gruppencomputereinheit Rj.

Mit dieser Vorgehensweise wird erreicht, daß nach Durchführung dieses Verfahrens sowohl die Gruppencomputereinheiten Rj als auch die erste Computereinheit C1 jeweils in Besitz des vertrauenswürdigen öffentlichen Schlüssels PK_I, PK_Rj des jeweiligen Kommunikationspartners ist. Die Schlüsselzertifikate CERTI, CERTRj werden in der ersten Computereinheit Cl bzw. der jeweiligen Gruppencomputereinheit Rj gespeichert.

Zur weiteren kryptographischen Absicherung des Verfahrens ist es in einer Weiterbildung vorgesehen, daß die einzelnen Schlüsselzertifikate CERTI, CERTRj nach dem jeweiligen Empfang verifiziert werden.

Die zweite Authentifikationsnachricht AN2 weist ferner in einer Weiterbildung eine Authentifikationsidentitätsprüfgröße SIG{NRj, NI} auf. Die Authentifikationsidentitätsprüfgröße SIG{NRj, NI} dient wiederum zur Gewährleistung der Identität der in diesem Fall zweiten Authentifikationsnachricht AN2.

Ferner wird in einer Weiterbildung mindestens ein Teil der zweiten Authentifikationsnachricht AN2 mit einem öffentlichen Schlüssel PK_I der ersten Computereinheit Cl verschlüsselt, wodurch für den jeweilige Teil der zweiten Authentifikationsnachricht AN2 die Vertraulichkeit gewährleistet wird.

In Fig. 4 ist das Verfahren mit einigen Weiterbildungen dargestellt. Die Weiterbildungen, obwohl sie in einer Figur zusammen dargestellt sind, sind keineswegs nur in der gesamten Gesamtkombination der Weiterbildungen vorgesehen, sondern auch jeweils nur in einzelnen Erweiterungen bzw. beliebiger Kombination der Weiterbildungen.

Die erste Nachricht N1 weist beispielsweise zusätzlich eine Liste von Adressen der Gruppencomputereinheiten Rj auf, die im weiteren als Gruppenliste GL bezeichnet wird. Ferner weist die erste Nachricht N1 das Schlüsselzertifikat CERTI der ersten Computereinheit C1 auf. In dieser Weiterbildung wird die erste Zufallszahl NI, der erste Sicherheitspolitikvorschlag SPI, und die erste Identitätsprüfgröße SIG{GL, NI, SPI} mit dem öffentlichen Schlüssel PK_Rj der jeweiligen Gruppencomputereinheit Rj verschlüsselt. Die erste Identitätsprüfgröße SIG{GL, NI, SPI} wird in diesem Beispielsfall durch eine digitale Signatur unter Verwendung des geheimen Schlüssels SK_I der ersten Computereinheit Cl über die Gruppenliste GL, die erste Zufallszahl NI und den ersten Sicherheitspolitikvorschlag SPI gebildet.

Mit dieser Weiterbildung wird schon mit der ersten Nachricht N1 die Authentifikation der ersten Computereinheit C1 bezüglich der jeweiligen Gruppencomputereinheit Rj, die Vertraulichkeit des ersten Sicherheitspolitikvorschlags SPI, die Vermeidung der Wiedereinspielung der ersten Nachricht N1 sowie die Integrität der Gruppenliste GL, der ersten Zufallszahl NI, sowie des ersten Sicherheitspolitikvorschlags SPI gewährleistet.

Nachdem die verschlüsselten Daten mit dem geheimen Schlüssel SK_Rj der jeweiligen Gruppencomputereinheit Rj entschlüsselt wurden, und anschließend die digitale Unterschrift, also die erste Identitätsprüfgröße SIG{GL, NI, SPI} verifiziert wurde 204, liegen in der jeweiligen Gruppencomputereinheit Rj die Gruppenliste GL, der öffentliche Schlüssel PK_I der ersten Computereinheit C1, die erste Zufallszahl NI sowie der erste Sicherheitspolitikvorschlag SPI vor.

Nach Bildung des jeweiligen zweiten Sicherheitspolitikvorschlags SPIRj in der jeweiligen Gruppencomputereinheit Rj 205 wird die zweite Nachricht N2 gebildet und an die erste Computereinheit C1 übertragen 206.

Die zweite Nachricht N2 enthält in diesem Beispiel mit den Weiterbildungen beispielsweise folgende Elemente:
- die zweite Zufallszahl NRj,
- die erste Zufallszahl NI,
- eine Identitätsangabe I der ersten Computereinheit C1,
- den zweiten Sicherheitspolitikvorschlag SPRj,
- einen über die oben genannten Größen gebildeten Hash-Wert h(NRj, NI, I, SPRj), der die zweite Identitätsprüfgröße SIG{SPRj} bildet.

Die zweite Nachricht N2 wird bei dieser Weiterbildung mit dem öffentlichen Schlüssel PK_I der ersten Computereinheit C1 verschlüsselt.

Die zweite Nachricht N2 wird von der ersten Computereinheit C1 empfangen 207, der Hash-Wert h(NRj, NI, I, SPRj) der zweiten Nachricht N2, also die zweite Identitätsprüfgröße SIG{SPRj} wird überprüft 208, wodurch die Integrität der Größen, über die der Hash-Wert h(NRj, NI, I, SPRj) gebildet wurde, gewährleistet wird.

Nachdem in der ersten Computereinheit C1 eine vorgebbaren Anzahl, beispielsweise alle oder mehr als eine vorgebbare Schranke von zweiten Nachrichten N2 von der ersten Computereinheiten C1 empfangen wurde 207 und ausgewertet wurde, wird in der ersten Computereinheit C1 die dritte Nachricht N3 gebildet 209 und jeweils in Kopie an die einzelnen Gruppencomputereinheiten Rj übertragen.

In einer Weiterbildung des Verfahrens wird eine Effizienzsteigerung bei der Durchführung des Verfahren dadurch erreicht, daß von einem bei dem Verfahren zur Übertragung der Daten verwendete Transportnetz einen sog. Multicast-Mechanismus zum Vervielfältigen einer Nachricht an für die Gruppencomputereinheiten Rj gleichzeitig angeboten wird. Der Multicast-Mechanismus kann beispielsweise entweder direkt im Transportnetz selbst als Dienst, beispielsweise durch eine Verfielfältigungseinheit, z. B. einem ATM-Switch, oder durch entsprechende Multicast/Broadcast-Adressierung in der ersten Computereinheit C1 selbst erreicht werden.

Die dritten Nachrichten N3 enthalten, je nach Adressat, also je nach der Gruppencomputereinheit Rj, zu der die dritte Nachricht N3 übertragen wird, beispielsweise folgende Elemente:
- die zweite Zufallszahl NRj, eine Identitätsangabe Rj der jeweiligen Gruppencomputereinheit Rj,
- die Gruppensicherheitspolitik SPG, sowie einen über die oben genannten Größen gebildeten Hash-Wert h(NRj, Rj, SPG), der die dritte Identitätsprüfgröße SIG{SPRj} bildet.

Die erste Nachrichten N1 und die dritte Nachricht N3 werden in dieser Weiterbildung mit den öffentlichen Schlüsseln PK_Rj der jeweiligen Gruppencomputereinheit Rj verschlüsselt.

Die dritten Nachrichten N3 werden an die jeweiligen Gruppencomputereinheiten Rj übertragen 210 und dort empfangen 211, die dritte Nachricht N3 wird jeweils mit dem geheimen Schlüssel SK_Rj der jeweiligen Gruppencomputereinheit Rj entschlüsselt und der Hash-Wert h(NRj, Rj, SPG) wird überprüft 212.

Ferner ist in Fig. 4 eine Weiterbildung beschrieben, bei der von den einzelnen Gruppencomputereinheiten Rj jeweils eine Quittungsnachricht ACK zu der ersten Computereinheit C1 übertragen wird.

Die Quittungsnachrichten ACK werden in den Gruppencomputereinheiten Rj gebildet. Die Quittungsnachrichten ACK enthalten, je nach Gruppencomputereinheit Rj, die die Quittungsnachricht ACK bilden, in dieser Weiterbildung beispielsweise folgende Elemente:
- die Identitätsangabe Rj der Gruppencomputereinheit Rj, die die Quittungsnachricht ACK sendet,
- sowie einen Hash-Wert h(NRj, NI, I, SPG), der mindestens über die zweite Zufallszahl NRj die erste Zufallszahl NI, die Identitätsangabe I der ersten Computereinheit C1 sowie über die Gruppensicherheitspolitik SPG gebildet wird.

Mit der Quittungsnachricht ACK wird der ersten Computereinheit C1 von der jeweiligen Gruppencomputereinheit Rj der verlässliche Erhalt der Information über die Gruppsicherheitspolitik SPG bestätigt.

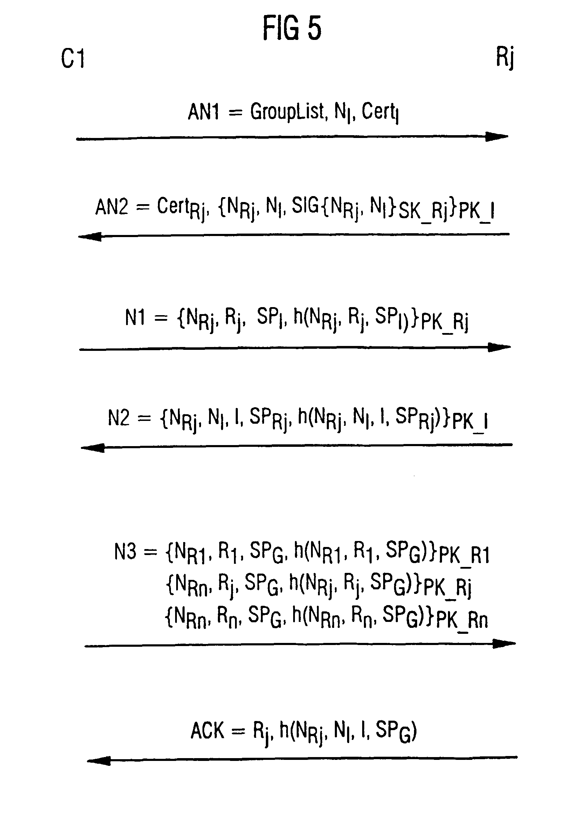

In Fig. 5 ist eine weitere Weiterbildung dargestellt, bei der nicht, wie bei der in Fig. 4 dargestellten Weiterbildung vorausgesetzt wird, daß in der ersten Computereinheit C1 alle vertrauenswürdigen öffentlichen Schlüssel PK_Rj der Gruppencomputereinheit Rj zur Verfügung stehen.

Bei dieser Weiterbildung werden die öffentlichen Schlüssel PK_Rj, PK_I der Computereinheiten C1, Rj zu Beginn des Verfahrens ausgetauscht, wobei gleichzeitig eine gegenseitige Authentifikation der Computereinheiten C1, Rj durchgeführt wird.

In der ersten Authentifikationsnachricht AN1, die in der ersten Computereinheit C1 gebildet wird und zu den Gruppencomputereinheiten Rj übertragen wird, sind beispielsweise folgende Elemente enthalten:
- die Gruppenliste GL,
- die erste Zufallszahl NI,
- das Schlüsselzertifikat CERTI der ersten Computereinheit C1.

Das Schlüsselzertifikat CERTI wird von der jeweiligen Gruppencomputereinheit Rj augewertet, verifiziert, und die erste Nachricht N1 wird mit seinen Elementen abgespeichert.

Die zweite Authentifikationsnachricht AN2, die in der jeweiligen Gruppencomputereinheit Rj gebildet wird und zu der ersten Computereinheit C1 übertragen wird, enthält bei dieser Weiterbildung beispielsweise folgende Elemente:
- die zweite Zufallszahl NRj,
- die erste Zufallszahl NI,
- die Authentifikationsidentitätsprüfgröße SIG{NRJ, NI},
- jeweils ein Schlüsselzertifikat CERTRj der jeweiligen Gruppencomputereinheit Rj.

Die Elemente der zweiten Authentifikationsnachricht AN2 werden alle bis auf das jeweilige Schlüsselzertifikat CERTRj der jeweiligen Gruppencomputereinheit Rj mit dem öffentlichen Schlüssel PK_I der ersten Computereinheit C1 verschlüsselt. Auf diese Weise ist die Vertraulichkeit der Zufallszahlen NRj, NI sowie der Signatur über die Zufallszahlen, also der Authentifikationsidentitätsprüfgröße SIG{NRJ, NI} gewährleistet.

Die zweite Authentifikationsnachrichten AN2 werden in der ersten Computereinheit C1 empfangen und mit dem geheimen Schlüssel SK_I der ersten Computereinheit C1 entschlüsselt.

Weiterhin wird die Authentifikationsidentitätsprüfgröße SIG{NRJ, NI} verifiziert.

In der ersten Computereinheit C1 wird anschließend die erste Nachricht N1 gebildet 201 und zu der jeweiligen Gruppencomputereinheit Rj übertragen 202.

Die erste Nachricht N1 enthält, jeweils abhängig von der jeweiligen Gruppencomputereinheit Rj, an die die erste Nachricht N1 gesendet wird, beispielsweise folgende Elemente:
- die jeweilige zweite Zufallszahl NRj, die von der jeweiligen Gruppencomputereinheit Rj an die erste Computereinheit C1 übertragen wurde,
- die jeweilige Identitätsangabe Rj der Gruppencomputereinheit Rj,
- den ersten Sicherheitspolitikvorschlag SPI,
- einen Hash-Wert h(NRj, Rj, SPI), der mindestens über die zweite Zufallszahl NRj, die Identitätsgröße NRj der Gruppencomputereinheit Rj sowie über den ersten Sicherheitspolitikvorschlag SPI gebildet wurde.

Der Hash-Wert h(NRj, Rj, SPI) bildet die erste Identitätsprüfgröße SIG{SPI}.

Die erste Nachricht N1 wird in verschlüsselter Form an die jeweilige Gruppencomputereinheit Rj übertragen 202, wobei die erste Nachricht N1 jeweils mit dem öffentlichen Schlüssel PK_Rj der jeweiligen Gruppencomputereinheit Rj verschlüsselt wird.

Nach Empfang 203 der verschlüsselten ersten Nachricht Nl wird in den Gruppencomputereinheiten Rj jeweils die erste Nachricht N1 mit dem jeweiligen geheimen Schlüssel SK_Rj der jeweiligen Gruppencomputereinheit Rj entschlüsselt und die Integrität der ersten Nachricht N1 wird mit dem Hash-Wert h(NRj, Rj, SPI) verifiziert 204. Ferner wird die zweite Nachricht N2 in den Gruppencomputereinheiten Rj gebildet 205 und jeweils zu der ersten Computereinheit C1 übertragen 206.

Die zweite Nachricht N2 enthält bei dieser Weiterbildung beispielsweise folgende Elemente:
- die zweite Zufallszahl NRj,
- die erste Zufallszahl NI,
- die Identitätsangabe I der ersten Computereinheit C1,
- den jeweiligen zweiten Sicherheitspolitikvorschlag SPRj,
- einen Hash-Wert h(NRj, NI, I, SPRj), der mindestens über die zweite Zufallszahl NRj, die erste Zufallszahl NI, die Identitätsangabe I der ersten Computereinheit C1, sowie den zweiten Sicherheitspolitikvorschlag SPRj gebildet wird.

Der Hash-Wert h(NRj, NI, I, SPRj) bildet die zweite Identitätsprüfgröße SIG{SPRj}.

Die zweite Nachricht N2 wird bei dieser Weiterbildung in verschlüsselter Form übertragen, wobei die zweite Nachricht N2 jeweils mit dem öffentlichen Schlüssel PK_I der ersten Computereinheit C1 verschlüsselt wird.

Nachdem die jeweilige zweite Nachricht N2 in der ersten Computereinheit C1 empfangen wurde 207, wird die zweite Nachricht N2 mit dem geheimen Schlüssel SK_I der ersten Computereinheit C1 entschlüsselt und die Identität wird durch Verifizierung des Hash-Wertes h(NRj, NI, I, SPRj) gewährleistet.

Weiterhin wird die Gruppensicherheitspolitik SPG ermittelt.

Ferner wird in der ersten Computereinheit C1 für jede Gruppeneinheit Rj die dritte Nachricht N3 gebildet 209, die sich jeweils nur durch die für die jeweilige Gruppencomputereinheit Rj spezifischen Elemente unterscheiden.

Die dritte Nachricht N3 enthält jeweils in dieser Weiterbildung beispielsweise folgende Elemente:
- die jeweilige zweite Zufallszahl NRj,
- die jeweilige Identitätsangabe Rj der Gruppencomputereinheit Rj,
- die Gruppensicherheitspolitik SPG,
- einen Hash-Wert h(NRj, Rj, SPG), der mindestens über die zweite Zufallszahl NRj, die Identitätsangabe Rj der Gruppencomputereinheit Rj sowie die Gruppensicherheitspolitik SPG gebildet wird.

Der Hash-Wert h(NRj, Rj, SPG) bildet die dritte Identitätsprüfgröße SIG{SPG}.

Die jeweilige dritte Nachricht N3 wird bei dieser Weiterbildung ebenso in verschlüsselter Form übertragen 210. Dabei wird die dritte Nachricht N3 jeweils mit dem öffentlichen Schlüssel PK_Rj der jeweiligen Gruppencomputereinheit Rj verschlüsselt.

Nachdem die dritte Nachricht N3 jeweils in der Gruppencomputereinheit Rj empfangen wurde 211, wird die dritte Nachricht N3 mit dem jeweiligen geheimen Schlüssel SK_Rj der Gruppencomputereinheit Rj entschlüsselt, und der Hash-Wert h(NRj, Rj, SPG) wird verifiziert 212.

Ferner wird die Quittungsnachricht ACK in der jeweiligen Gruppencomputereinheit Rj gebildet und an die erste Computereinheit C1 übertragen.

Die Quittungsnachricht ACK weist in diesem Beispiel folgende Elemente auf:
- die Identitätsangabe Rj der jeweiligen Gruppencomputereinheit Rj,
- einen Hash-Wert h(NRj, NI, I, SPG), der mindestens über die zweite Zufallszahl NRj, die erste Zufallszahl NI, die Identitätsgröße I der ersten Computereinheit C1 sowie die Gruppensicherheitspolitik SPG gebildet wird.

Das Verfahren kann sowohl in sog. On-Line-Schlüsselmanagement-Szenarios als auch in sog. Off-Line-Schlüsselmanagement-Szenarios eingesetzt werden.

Die in den Fig. 4 und 5 dargestellten Weiterbildungen stellen insoweit eine vorteilhafte Weiterbildung dar, da es durch diese Vorgehensweise möglich ist, die Anzahl benötigter digitaler Signaturen zur Gewährleistung der Integrität der übertragenen Daten minimal zu halten und anstelle der in der Bildung der rechenaufwendigen digitalen Signaturen in der Bildung weniger rechenaufwendige Hash-Werte zu verwenden.

Dabei kann in beliebiger Kombination mindestens die erste Identitätsprüfgröße SIG{SPI} die zweite Identitätsprüfgröße h(SPRj) sowie die dritte Identitätsprüfgröße h(SPG) sowie die Authentifikationsidentitätsprüfgröße SIG{NRJ, NI} durch Bildung von Hash-Werten gebildet werden.

In den Fig. 4 und 5 wird die erste Identitätsprüfgröße SIG{SPI} durch den Hash-Wert h(NRj, Rj, SPI) bzw. die digitale Signatur SIG{GL, NI, SPI} gebildet.

Die zweite Identitätsprüfgröße SIG{SPRj} wird bei dem in Fig. 4 dargestellten Verfahren durch den Hash-Wert h(NRj, NI, I, SPRj) und bei dem in Fig. 5 dargestellten Verfahren durch den Hash-Wert h(NRj, NI, I, SPRj) gebildet.

Die jeweilige dritte Identitätsprüfgröße SIG{SPG} wird bei den in Fig. 4 und 5 dargestellten Verfahren jeweils durch den Hash-Wert h(NRj, Rj, SPG) gebildet.

Ferner wird die Authentifikationsidentitätsprüfgröße SIG{NRj, NI} bei dem in Fig. 4 dargestellten Verfahren mit der digitalen Signatur SIG{NRj, NI} bzw. bei dem in Fig. 5 dargestellten Verfahren durch den Hash-Wert h(NRj, NI, I, SPRj) gebildet.

In einer Weiterbildung des Verfahrens ist der Einsatz von digitalen Signaturen in dem gesamten Verfahren bei beliebigen Identitätsprüfgrößen vorgesehen. Durch den Einsatz digitaler Signaturen wird indirekt über die Identitätsprüfgrößen, die mit einer digitalen Signatur gebildet wurden, eine verbindliche und nicht ableugbare Übertragung für die jeweilige Nachricht erreicht. Werden für alle Identitätsprüfgrößen digitale Signaturen gebildet, wird ein verbindliches und nicht ableugbares gruppenbasiertes Schlüsselmanagement mit einer Aushandlungsphase der Sicherheitspolitik realisiert.

In diesem Dokument wurden folgende Veröffentlichungen zitiert:
[1] S. Muftic, Sicherheitsmechanismen für Rechnernetze, Karl Hansa Verlag München, ISBN 3-446-16272-0, S. 34 bis 70, 1992
[2] E. Kipp et al, The SSL Protocol, Internet Draft, Erhältlich im Juni 1995 im Internet unter folgender Adresse:
   gopher://ds.internic.net:70/00/internet-drafts/ draft-hickman-netscape-ssl-01.txt
[3] B. Chorley et al., "The definition and implementation of a secure communications protocol", Seite 95-102, Proceedings of the International Carnahan Conference on Security Technology, Zürich, Switzerland, October 1983

## Patentansprüche

1. Verfahren zur gruppenbasierten Vereinbarung einer kryptographischen gemeinsamen Sicherheitspolitik zwischen einer ersten Computereinheit (I) und Gruppencomputereinheiten (Rj, j = 1 .. m),
- bei dem von der ersten Computereinheit (I) eine erste Nachricht (N1) gebildet wird,
- bei dem die erste Nachricht (N1) mindestens einen ersten Sicherheitspolitikvorschlag (SPI) und eine erste Identitätsprüfgröße (SIG{SPI}) enthält ,
- bei dem die erste Nachricht (N1) von der ersten Computereinheit (I) zu mindestens einem Teil der Gruppencomputereinheiten (Rj) übertragen wird,
- bei dem in den Gruppencomputereinheiten (Rj) folgende Schritte durchgeführt werden:
-- die erste Nachricht (N1) wird von der jeweiligen Gruppencomputereinheit (Rj) empfangen,
-- die Integrität des ersten Sicherheitspolitikvorschlags (SPI) wird anhand der ersten Identitätsprüfgröße (SIG{SPI}) überprüft,
-- es wird jeweils eine zweite Nachricht (N2) gebildet, wobei die zweite Nachricht (N2) mindestens einen zweiten Sicherheitspolitikvorschlag (SPRj) und eine zweite Identitätsprüfgröße (SIG{SPRj}) aufweist,
- bei dem die zweiten Nachrichten (N2) von den Gruppencomputereinheiten (Rj) zu der ersten Computereinheit (C1) übertragen werden,
- bei dem die zweiten Nachrichten (N2) von der ersten Computereinheit (C1) empfangen werden,
- bei dem die Integrität des jeweiligen zweiten Sicherheitspolitikvorschlags (SPRj) jeweils anhand der entsprechenden zweiten Identitätsprüfgröße (SIG{SPRj}) überprüft wird,
- bei dem eine dritte Nachricht (N3) von der ersten Computereinheit (C1) gebildet wird,
- bei dem die dritte Nachricht (N3) mindestens eine Gruppensicherheitspolitik (SPG) und eine dritte Identitätsprüfgröße (h(SPG)) aufweist,
- bei dem die dritte Nachricht (N3) von der ersten Computereinheit (C1) zu mindestens dem Teil der Gruppencomputereinheiten (Rj) übertragen wird,
- bei dem in den Gruppencomputereinheiten (Rj) folgende Schritte durchgeführt werden:
-- die dritte Nachricht (N1) wird von der jeweiligen Gruppencomputereinheiten (Rj) empfangen, und
-- die Integrität der Gruppensicherheitspolitik (SPG) wird anhand der dritten Identitätsprüfgröße (h(SPG)) überprüft.

2. Verfahren nach Anspruch 1,
- bei dem die erste Nachricht (N1) und/oder die dritte Nachricht (N3) jeweils mit einem öffentlichen Schlüssel (PK_Rj) der Gruppencomputereinheit (Rj) verschlüsselt wird, und
- bei dem die erste Nachricht (N1) und/oder die dritte Nachricht (N3) in der Gruppencomputereinheit (Rj) mit einem geheimen Schlüssel der jeweiligen Gruppencomputereinheit (Rj) entschlüsselt werden.

3. Verfahren nach Anspruch 1 oder 2,
bei dem die Nachrichten (N1, N2, N3) jeweils mindestens eine Zufallszahl (NI, NRj) aufweisen.

4. Verfahren nach einem der Ansprüche 1 bis 3,
bei dem die erste Nachricht (N1) ein Schlüsselzertifikat (CertI) der ersten Computereinheit (C1) aufweist.

5. Verfahren nach einem der Ansprüche 1 bis 3,
- bei dem vor der Übertragung der ersten Nachricht (N1) eine erste Authentifikationsnachricht (AN1) in der ersten Computereinheit (C1) gebildet wird,
- bei dem die erste Authentifikationsnachricht (AN1) mindestens ein ein Schlüsselzertifikat (CertI) der ersten Computereinheit (C1) aufweist,
- bei dem die erste Authentifikationsnachricht (AN1) von der ersten Computereinheit (C1) zu mindestens einem Teil der Gruppencomputereinheiten (Rj) übertragen wird, und
- bei dem in den Gruppencomputereinheiten (Rj) das Schlüsselzertifikat (CertI) der ersten Computereinheit (C1) verifiziert wird und gespeichert wird.

6. Verfahren nach einem der Ansprüche 1 bis 5,
- bei dem vor der Übertragung der ersten Nachricht (N1) in mindestens einem Teil der Gruppencomputereinheiten (Rj) jeweils eine zweite Authentifikationsnachricht (AN2) in den Gruppencomputereinheiten (Rj) gebildet wird,
- bei dem die zweite Authentifikationsnachricht (AN2) jeweils mindestens Schlüsselzertifikate (CERTRj) der Gruppencomputereinheiten (Rj) aufweisen,
- bei dem die zweiten Authentifikationsnachrichten (AN2) von den Gruppencomputereinheiten (Rj) zu der ersten Computereinheit (C1) übertragen werden, und
- bei dem in der ersten Computereinheit (C1) die Schlüsselzertifikate (CertRj) der Gruppencomputereinheiten (Rj) verifiziert werden und gespeichert werden.

7. Verfahren nach Anspruch 3 und 6,
- bei dem die zweiten Authentifikationsnachrichten (AN2) eine Authentifikationsidentitätsprüfgröße (SIG{NRJ, NI}) aufweist, und
- bei dem mindestens ein Teil der zweiten Authentifikationsnachrichten (AN2) mit einem öffentlichen Schlüssel (PK_I) der ersten Computereinheit (C1) verschlüsselt wird.

8. Verfahren nach einem der Ansprüche 1 bis 7,
- bei dem von den Gruppencomputereinheiten (Rj) nach der Überprüfung der Integrität der Gruppensicherheitspolitik (SPG) jeweils Quittungsnachricht (ACK) gebildet wird,
- bei dem die Quittungsnachrichten (ACK) von den Gruppencomputereinheiten (Rj) zu der ersten Computereinheit (C1) übertragen werden, und
- bei dem die Quittungsnachrichten (ACK) in der ersten Computereinheit (C1) auf Integrität überprüft werden.

9. Verfahren nach einem der Ansprüche 1 bis 8,
bei dem mindestens eine der folgenden Identitätsprüfgrößen unter Verwendung einer Hash-Funktion (h) gebildet wird:
- die erste Identitätsprüfgröße (h(SPI)),
- die zweite Identitätsprüfgröße (h(SPRj)),
- die dritte Identitätsprüfgröße (h(SPG)),
- die Authentifikationsidentitätsprüfgröße (SIG{NRJ, NI}).

10. Verfahren nach einem der Ansprüche 1 bis 9,
bei dem die Gruppensicherheitspolitik (SPG) mindestens einen Gruppenverteilungsschlüssel (K_{C}) zur Verschlüsselung und Verteilung im weiteren verwendeter Gruppenkonferenzschlüssel (K_{D}) oder den Gruppenkonferenzschlüssel (K_{D}) enthält.

11. Verfahren nach einem der Ansprüche 1 bis 10,
bei dem mehrere weitere Nachrichten mit weiteren Sicherheitspolitikvorschlägen von der ersten Computereinheit (C1) bzw. von den Gruppencomputereinheiten (Rj) gebildet werden und übertragen werden.

12. Verfahren nach einem der Ansprüche 1 bis 11,
bei dem ein Multicast-Mechanismus zur Vervielfältigung zu übertragender Nachrichten vorgesehen wird.

13. Verfahren nach einem der Ansprüche 1 bis 12,
bei dem mindestens ein Teil der Identitätsprüfgrößen unter Verwendung einer digitalen Signatur gebildet wird.

## Claims

1. Method for group-based agreement of a common cryptographic security policy between a first computer unit (I) and group computer units (Rj, j = 1 .. m),
- in which the first computer unit (I) forms a first message (N1)
- in which the first message (N1) contains at least a first security policy proposal (SPI) and a first identity checking variable (SIG{SPI}),
- in which the first message (N1) is transmitted from the first computer unit (I) to at least some of the group computer units (Rj),
- in which the following steps are carried out in the group computer units (Rj),
-- the first message (N1) is received by the respective group computer unit (Rj),
-- the integrity of the first security policy proposal (SPI) is checked on the basis of the first identity checking variable (SIG{SPI}),
-- a second message (N2) is in each case formed, the second message (N2) having at least a second security policy proposal (SPRj) and a second identity checking variable (SIG{SPRj}),
- in which the second messages (N2) are transmitted from the group computer units (Rj) to the first computer unit (C1),
- in which the second messages (N2) are received by the first computer unit (C1)
- in which the integrity of the respective second security policy proposal (SPRj) is in each case checked using the corresponding second identity checking variable (SIG{SPRj}),
- in which a third message (N3) is formed by the first computer unit (C1),
- in which the third message (N3) has at least one group security policy (SPG) and a third identity checking variable (h(SPG)),
- in which the third message (N3) is transmitted from the first computer unit (C1) to at least some of the group computer units (Rj),
- in which the following steps are carried out in the group computer units (Rj),
-- the third message (N1) is received by the respective group computer units (Rj), and
-- the integrity of the group security policy (SPG) is checked using the third identity checking variable (h(SPG)).

2. Method according to Claim 1,
- in which the first message (N1) and/or the third message (N3) are/is in each case encrypted using a public code (PK_Rj) of the group computer unit (Rj), and
- in which the first message (N1) and/or the third message (N3) are/is decrypted in the group computer unit (Rj) using a secret code of the respective group computer unit (Rj).

3. Method according to Claim 1 or 2,
in which the messages (N1, N2, N3) each have at least one random number (NI, NRj).

4. Method according to one of Claims 1 to 3, in which the first message (N1) has a code certificate (CertI) of the first computer unit (C1).

5. Method according to one of Claims 1 to 3,
- in which, before transmission of the first message (N1), a first authentication message (AN1) is formed in the first computer unit (C1),
- in which the first authentication message (AN1) has at least one code certificate (CertI) of the first computer unit (C1),
- in which the first authentication message (AN1) is transmitted from the first computer unit (C1) to at least some of the group computer units (Rj), and
- in which the group computer units (Rj) verify and store the code certificate (CertI) of the first computer unit (C1).

6. Method according to one of Claims 1 to 5,
- in which, before transmission of the first message (N1) and in at least some of the group computer units (Rj), a second authentication message (AN2) is in each case formed in the group computer units (Rj),
- in which the second authentication messages (AN2) in each case have at least code certificates (CERTRj) of the group computer units (Rj),
- in which the second authentication messages (AN2) are transmitted from the group computer units (Rj) to the first computer unit (C1), and
- in which the first computer unit (C1) verifies and stores the code certificates (CertRj) of the group computer units (Rj).

7. Method according to Claims 3 and 6,
- in which the second authentication messages (AN2) have an authentication identity checking variable (SIG{NRJ, NI}), and
- in which at least some of the second authentication messages (AN2) are encrypted using a public code (PK_I) of the first computer unit (C1).

8. Method according to one of Claims 1 to 7,
- in which, after checking the integrity of the group security policy (SPG), the group computer units (Rj) in each case form an acknowledgement message (ACK),
- in which the acknowledgement messages (ACK) are transmitted from the group computer units (Rj) to the first computer unit (C1), and
- in which the acknowledgement messages (ACK) are checked for integrity, in the first computer unit (C1).

9. Method according to one of Claims 1 to 8, in which at least one of the following identity checking variables is formed using a hash function (h):
- the first identity checking variable (h(SPI)),
- the second identity checking variable (h(SPRj)),
- the third identity checking variable (h(SPG)),
- the authentication identity checking variable (SIG{NRJ, NI}).

10. Method according to one of Claims 1 to 9, in which the group security policy (SPG) contains at least one group distribution code (K_{C}) for encryption and distribution of the group conference codes (K_{D}) which continue to be used, or the group conference code (K_{D}).

11. Method according to one of Claims 1 to 10, in which a plurality of further messages having further security policy proposals are formed and transmitted by the first computer unit (C1) and by the group computer units (Rj).

12. Method according to one of Claims 1 to 11, in which a multicast mechanism is provided for copying messages to be transmitted.

13. Method according to one of Claims 1 to 12, in which at least some of the identity checking variables are formed using a digital signature.

## Revendications

1. Procédé de convention fondée sur un groupe d'une politique de sécurité cryptographique commune entre une première unité informatique (I) et des unités informatiques d'un groupe (Rj, j = 1..m),
- dans lequel de la première unité informatique (I) un premier message (N1) est formé;
- dans lequel le premier message (N1) contient au moins une première proposition de politique de sécurité (SPI) et une première variable de vérification d'identité (SIG{SPI});
- dans lequel le premier message (N1) est transmis de la première unité informatique (I) à au moins une partie des unités informatiques d'un groupe (Rj);
- dans lequel, dans les unités informatiques d'un groupe (Rj) les étapes suivantes sont réalisées :
- le premier message (N1) est reçu de l'unité informatique respective d'un groupe (Rj);
- l'intégrité de la première proposition de politique de sécurité (SPI) est vérifiée à l'aide de la première variable de vérification d'identité (SIG{SPI});
- il se forme chaque fois un deuxième message (N2), le deuxième message (N2) présentant au moins une deuxième proposition de politique de sécurité (SPRj) et une deuxième variable de vérification d'identité (SIG{SPRj};
- dans lequel les deuxièmes messages (N2) sont transmis des unités informatiques d'un groupe (Rj) à la première unité informatique (C1);
- dans lequel les deuxièmes messages (N2) sont reçus par la première unité informatique (C1);
- dans lequel l'intégrité de la deuxième proposition de politique de sécurité (SPRj) respective est chaque fois vérifiée à l'aide de la deuxième variable de vérification d'identité (SIG{SPRj}) correspondante;
- dans lequel un troisième message (N3) est formé par la première unité informatique (C1);
- dans lequel le troisième message (N3) présente au moins une politique de sécurité d'un groupe (SPG) et une troisième variable de vérification d'identité (h(SPG));
- dans lequel le troisième message (N3) est transmis de la première unité informatique (C1) à au moins la partie des unités informatiques d'un groupe (Rj);
- dans lequel les étapes suivantes sont réalisées dans les unités informatiques d'un groupe (Rj) :
- le troisième message (N1) est reçu par l'unité informatique d'un groupe (Rj) respective, et
- l'intégrité de la politique de sécurité d'un groupe (SPG) est vérifiée à l'aide de la troisième variable de vérification d'identité (h(SPG)).

2. Procédé selon la revendication 1,
- dans lequel le premier message (N1) et/ou le troisième message (N3) est chaque fois chiffré avec une clé publique (PK_Rj) de l'unité informatique d'un groupe (Rj), et
- dans lequel le premier message (N1) et/ou le troisième message (N3) est déchiffré dans l'unité informatique d'un groupe (Rj) avec une clé secrète de l'unité informatique d'un groupe (Rj) respective.

3. Procédé selon la revendication 1 ou 2,
dans lequel les messages (N1, N2, N3) présentent chaque fois au moins un nombre aléatoire (NI, NRj).

4. Procédé selon l'une des revendications 1 à 3, dans lequel le premier message (N1) présente un certificat chiffré (CertI) de la première unité informatique (C1).

5. Procédé selon l'une des revendications 1 à 3,
- dans lequel, avant la transmission du premier message (N1), se forme un premier message d'authentification (AN1) dans la première unité informatique (C1);
- dans lequel le premier message d'authentification (AN1) présente au moins un certificat chiffré (CertI) de la première unité informatique (C1);
- dans lequel le premier message d'authentification (AN1) est transmis de la première unité informatique (C1) à au moins une partie des unités informatiques d'un groupe (Rj), et
- dans lequel, dans les unités informatiques d'un groupe (Rj), le certificat chiffré (CertI) de la première unité informatique (C1) est vérifié et mémorisé.

6. Procédé selon l'une des revendications 1 à 5,
- dans lequel, avant la transmission du premier message (N1) dans au moins une partie des unités informatiques d'un groupe (Rj), se forme chaque fois un deuxième message d'authentification (AN2) dans les unités informatiques d'un groupe (Rj);
- dans lequel le deuxième message d'authentification (AN2) présente chaque fois au moins des certificats chiffrés (CERTRj) des unités informatiques d'un groupe (Rj);
- dans lequel les deuxièmes messages d'authentification (AN2) sont transmis des unités informatiques d'un groupe (Rj) à la première unité informatique (C1), et
- dans lequel, dans la première unité informatique (C1), les certificats chiffrés (CertRj) des unités informatiques d'un groupe (Rj) sont vérifiés et mémorisés.

7. Procédé selon la revendication 3 et 6,
- dans lequel les deuxièmes messages d'authentification (AN2) présentent une variable de vérification d'identité d'authentification (SIG{NRJ, NI}),et
- dans lequel au moins une partie des deuxièmes messages d'authentification (AN2) est chiffrée avec une clé publique (PK_I) de la première unité informatique (C1).

8. Procédé selon l'une des revendications 1 à 7,
- dans lequel, après la vérification de l'intégrité de la politique de sécurité d'un groupe (SPG), à chaque fois un message d'accusé de réception (ACK) est formé par les unités informatiques d'un groupe (Rj);
- dans lequel les messages d'accusé de réception (ACK) sont transmis des unités informatiques d'un groupe (Rj) à la première unité informatique (C1), et
- dans lequel les messages d'accusé de réception (ACK) dans la première unité informatique (C1) sont vérifiés sur le plan de l'intégrité.

9. Procédé selon l'une des revendications 1 à 8,
dans lequel au moins une des variables de vérification d'identité suivantes est formée en utilisant une fonction de hachage (h) :
- la première variable de vérification d'identité (h(SPI));
- la deuxième variable de vérification d'identité (h(SPRj));
- la troisième variable de vérification d'identité (h(SPG)), et
- la variable de vérification d'identité d'authentification (SIG{NRJ, NI}).

10. Procédé selon l'une des revendications 1 à 9,
dans lequel la politique de sécurité d'un groupe (SPG) contient au moins une clé de distribution d'un groupe (Kc) pour le chiffrement et la distribution dans d'autres clés de conférence d'un groupe utilisées (K_{D}), ou la clé de conférence d'un groupe (Ko).

11. Procédé selon l'une des revendications 1 à 10,
dans lequel plusieurs autres messages avec d'autres propositions de politique de sécurité sont formés et transmis par la première unité informatique (C1) resp. les unités informatiques d'un groupe (Rj).

12. Procédé selon l'une des revendications 1 à 11,
dans lequel un mécanisme multidestinataire est prévu pour la multiplication des messages à transmettre.

13. Procédé selon l'une des revendications 1 à 12,
dans lequel au moins une partie des variables de vérification d'identité est formée en utilisant une signature numérique.
